# EUROPEAN PATENT APPLICATION

(11) **EP 3 163 513 A1**
(43) Date of publication of application: **03.05.2017**
(21) Application number: 15191372.0
(22) Date of filing: 26.10.2015
(51) Int. Cl.: G06N 5/04, G06F 17/30

(54) **METHOD OF AUTOMATED NOTATION 3 (N3) QUERY RULE CREATION**

(71) Applicant: Agfa Healthcare, 2640 Mortsel (BE)
(72) Inventor: Sun, Hong, 2640 Mortsel (BE); De Roo, Jos, 2640 Mortsel (BE); Depraetere, Kristof, 2640 Mortsel (BE); Mels, Giovanni, 2640 Mortsel (BE)
(74) Representative: Verbrugghe, Anne Marie L.

(57) **Abstract**

A query rule set is created by applying a query generation query rule to an inference rule set so as to generate a query rule set via a reasoning process executed by a reasoner whereby said reasoner answers said query generation query rule by taking the basic graph pattern of the conclusion of one or more inference rules in said inference rule set and generating a corresponding query rule for said basic graph pattern, wherein in said generated query rule both premise and conclusion are using said basic graph pattern.

## Description

### FIELD OF THE INVENTION

The present invention relates to a method for generating query rules for result filtering in a Notation 3 (N3) reasoning process.

### BACKGROUND OF THE INVENTION

Notation 3, or N3 as it is commonly referred to, is an assertion and logic language which is a superset of Resource Description Framework (RDF). N3 extends the RDF datamodel by adding formulae (literals which are graphs themselves), variables, logical implication, and functional predicates, which allows it to be uses for expressing rules.

N3 rules can be categorized as inference rules and query rules.

An inference rule generates entailments from given facts. The generated entailments and the given facts are nevertheless mixed together after the inference process.

Query rules are therefore applied on those mixed data as a filter, to output only the data that a user is interested in.

While much attention is paid on improving the performance of the inference rule, less efforts are made on the query rules, which however may also have a big impact on the overall performance.

Manually crafting query rules requires much effort and the process of generating and maintaining the query rule set is also error prone.

The drawbacks of manually crafting query rules are the following:
1. Much effort is required to pick conclusions from the inference rules to shape an output graph.
2. When the inference rules change, corresponding updates on the query rules are required.
3. The manually crafted query (see the manually created query rule set example below) can provide a good view by grouping combining outputs of different rules into a graph view. Nevertheless, this approach also has drawbacks regarding performance when many optional statements are involved.
4. Having both inference rules and query rules also brings extra burden on debugging. Once an error or performance issue pops up, a user needs to look into two sets of rules (inference and query rules), as well as the synchronization between the two rule sets.

It is possible to skip the query rules. e.g. for CWM, without stating the --filter condition, or in EYE, use --pass.
The hidden semantic is that a query rule {?s ?p ?o.}=>{?s ?p ?o.} is implicitly applied.
The drawback of this approach is that the given facts are passed together with the entailments derived by the inference rules; while a user normally needs only the latter ones, because the user was already aware of the input facts.

### SUMMARY OF THE INVENTION

The above-mentioned disadvantageous effects are solved by a method as set out in claim 1.

Specific features for preferred embodiments of the invention are set out in the dependent claims.

Further advantages and embodiments of the present invention will become apparent from the following description and drawings.

### BRIEF DESCRIPTION OF THE DRAWINGS

Fig. 1 illustrates the process of manually creating query rules,
Fig. 2 illustrates the process of automatically creating query rules.

### DETAILED DESCRIPTION OF THE INVENTION

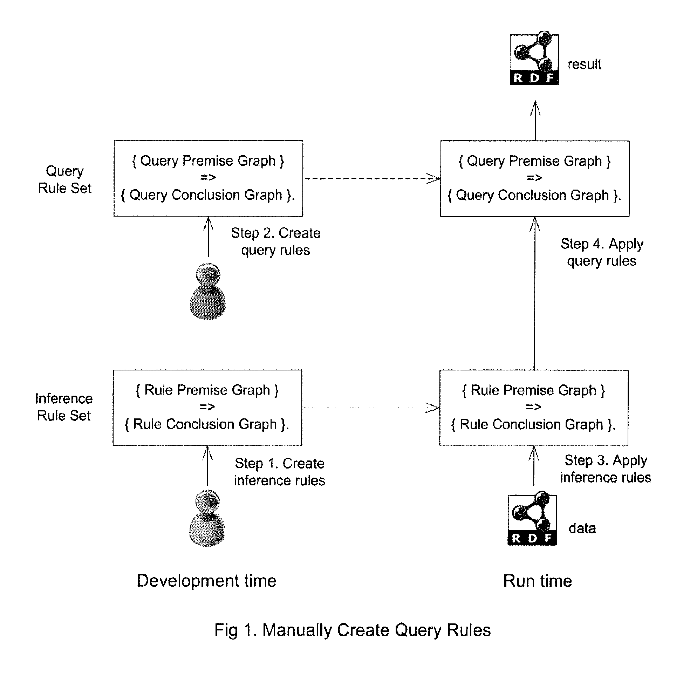

Figure 1 shows the workflow in case of a manually created query.

At development time, in a first step (step 1) an inference rule set is created by a user.
The inference rule set contains a set of rules which are following the pattern {Rule Premise Graph} => {Rule Conclusion Graph}.

In a second step (step 2) query rules are created by the user so as to filter the output of the inference rules.
The query rule set contains a set of rules which are following the pattern {Query Premise Graph} => {Query Conclusion Graph}. A user may combine several Rule Conclusion Graphs to build a Query Premise Graph. It is therefore common that the query rule set created by a user contains less rules than the corresponding inference rule set.

At run time, the inference rules are first applied to the input data (step 3) and then manually created query rules are applied to filter the output (step 4).

Results are returned after applying the query rules.

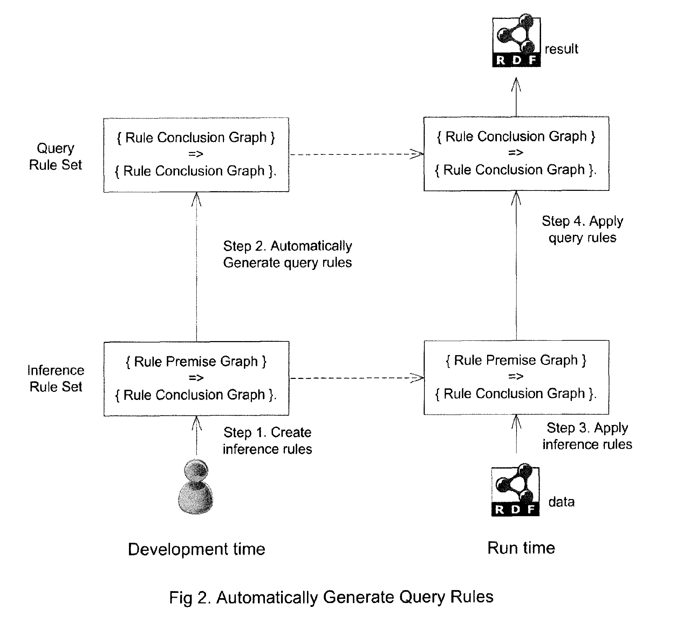

Figure 2 shows the workflow according to the present invention with automatically created queries.

At development time, in a first step (step 1) an inference rule set is created by the user.

Instead of manually creating query rules, query rules are now automatically generated in step 2.

The query generation process takes the inference rule set as input and creates a corresponding query rule for each of the inference rules.

It takes the rule conclusion graph as both the query premise graph and query conclusion graph.

Thus a query rule appears like : {Rule Conclusion Graph} => {Rule Conclusion Graph}.

The method has been described for N3 reasoning but could likewise be applicable to other mechanisms that allow meta reasoning, i.e. that allow the generation of a query from a rule set.

The invention will be explained with reference to the following example.

Below is a sample inference rule set.

**Table 1. Sample inference rule set**

| |
|---|
| ```
 prefix orbis: <http://www.agfa.com/orbis-schema#>
 prefix schema: <http://schema.org/>
 {?patient a orbis:Patient.}=>{?patient a schema:Patient.}.
 {?patient a orbis:Patient. ?patient orbis:gebdat
 ?birthDate.}=>{?patient schema:birthDate ?birthDate.}.
 {?patient a orbis:Patient. ?patient orbis:geschlecht
 ?gender.}=>{?patient schema:gender ?gender.}.
 {?patient a orbis:Patient. ?patient orbis:name
 ?familyName.}=>{?patient schema:familyName ?familyName.}.
``` |

Suppose we have the following data as input data:

**Table 2. Sample input dataset**

| |
|---|
| ```
 <http://example.org/patient/1> a orbis:Patient.
 <http://example.org/patient/1> orbis:gebdat "1981-01- 01T00:00:00+01:00"^^
<http://www.w3.org/2001/
XMLSchema#dateTime >.
 <http://example.org/patient/1> orbis:geschlecht "Male".
 <http://example.org/patient/1> orbis:name "Agfa".
 Apply the inference rule to the data will inference the
 following results:
``` |

**Table 3. Sample inferenced result**

| |
|---|
| ```
 <http://example.org/patient/1> a schema:Patient.
 <http://example.org/patient/1> schema:birthDate
"1981-01- 01T00:00:00+01:00"^^<http://www.w3.org/2001/
XMLSchema#dateTime >.
 <http://example.org/patient/1> schema:gender "Male".
 <http://example.org/patient/1> schema:familyName "Agfa".
``` |

However, unless a filtering rule is applied, the inferenced data would be mixed together with the input data. The output data after applying the sample inference rule to the sample input data, without filtering, would be the followings:

**Table 4. Sample output result-without filtering**

| |
|---|
| ```
 <http://example.org/patient/1> a orbis:Patient.
 <http://example.org/patient/1> orbis:gebdat "1981-01- 01T00:00:00+01:00"^^<http://
www.w3.org/2001/
XMLSchema#dateTime >.
 <http://example.org/patient/1> orbis:geschlecht "Male".
 <http://example.org/patient/1> orbis:name "Agfa".
 <http://example.org/patient/1> a schema:Patient.
 <http://example.org/patient/1> schema:birthDate "1981-01-
 01T00:00:00+01:00"^^<http://www.w3.org/2001/XMLSchema#dateTime
 >.
 <http://example.org/patient/1> schema:gender "Male".
 <http://example.org/patient/l> schema:familyName "Agfa".
``` |

A manually created rule set can be expressed as below and could help to filter the results, and restrict the output to the inferenced triples.

**Table 5. Sample manually created query rule set**

| |
|---|
| ```
 {
     ?patient a schema:Patient.
     ?patient schema:birthDate ?birthDate.
     ?patient schema:gender ?gender.
     ?patient schema:familyName ?familyName.
 }=>{
    ?patient a schema:Patient;
         schema:birthDate ?birthDate;
         schema:gender ?gender;
         schema:familyName ?familyName.
 }.
``` |

Applying the above query rule could help to restrict the output from the mixed data to what contains only the inferenced results as displayed in Table 3.

Meanwhile, we could also use a query generation rule (see below) to generate an automated query:

**Table 6. Query generation query: queryGen.n3q**

| |
|---|
| ```
 {?P => ?C.}=>{?C => ?C.}.
 We use EYE N3 Reasoning Engine as an example, the command to
 generate a query rule set is as below:
``` |

**Table 7. Query generation command**

| |
|---|
| ```
 eye --nope rule.n3 --query queryGen.n3q >auto_query.n3q
``` |

In the above command, the EYE reasoner takes rule.n3 (as specified in Table 1) as input data, and apply the query generation query (as specified in Table 6) as a query rule.

The query rule tries to find data which fulfills its premise expression, and generates conclusion expressions correspondingly.

For example, the rule below matches the premise expression of the query generation query (in Table 6)).

{?patient a orbis:Patient.}=>{?patient a schema:Patient.}. The variable ?P in the query rule (in Table 6) is grounded to the basic graph pattern {?patient a orbis:Patient.} (the premise graph of the above rule), and the variable ?C in the query rule is grounded to the basic graph pattern {?patient a schema:Patient.} (the conclusion graph of the above rule) . The conclusion of the query rule is therefore generated using the grounded value of ?C. It is expressed as:

```
{?patient a schema:Patient.}=>{?patient a schema:Patient.}.
 Because EYE rewrites variables in its output, the final
 results is then expressed as:{?U0 a
 <http://schema.org/Patient>} => {?U0 a
 <http://schema.org/Patient>}.
```

The full output of the executing the query generation command in Table 7 generates a set of query rules listed below.

**Table 8. automatically generated query:auto_query.n3q**

| |
|---|
| ```
 #Processed by EYE-Autumn15 10191509Z josd
 #eye --nope rule.n3 --query queryGen.n3q
 PREFIX orbis: <http://www.agfa.com/orbis-schema#>
 PREFIX schema: <http://schema.org/>
 {?U0 a <http://schema.org/Patient>} => {?U0 a
 <http://schema.org/Patient>}.
 {?U1 <http://schema.org/birthDate> ?U2} => {?U1
 <http://schema.org/birthDate> ?U2}.
 {?U3 <http://schema.org/gender> ?U4} => {?U3
 <http://schema.org/gender> ?U4}.
 {?U5 <http://schema.org/familyName> ?U6} => {?U5
 <http://schema.org/familyName> ?U6}.
 #ENDS 0.049 [sec] IO=5/4 TC=4 TP=8 BC=0 BP=0 PM=0 CM=0 FM=0
 AM=0
``` |

The automatically generated rule could be applied to the mixed result to only output the inferenced result.

## Claims

1. Method for generating query rules for result filtering in Notation 3 (N3) reasoning process comprising the steps of applying a query generation query rule to an inference rule set so as to generate a query rule set via a reasoning process by means of a reasoner whereby said reasoner answers said query generation query rule by taking the basic graph pattern of the conclusion of one or more inference rules in said inference rule set and generating a corresponding query rule for said basic graph pattern, wherein in said generated query rule both premise and conclusion are using said basic graph pattern.

2. A method according to claim 1 wherein said query generation query rule is expressed as an N3 rule :
{? P => ? C.} => { ? C => ? C.}.
